# EUROPÄISCHE PATENTSCHRIFT

(11) **EP 1 856 611 B1**
(45) Veröffentlichungstag und Bekanntmachung des Hinweises auf die Patenterteilung: **10.06.2009**
(21) Anmeldenummer: 06708496.2
(22) Anmeldetag: 24.02.2006
(51) Int. Cl.: G06F 11/10

(54) **VERFAHREN ZUR DATENSICHERUNG UND GERÄT ZU DESSEN AUSFÜHRUNG**
METHOD FOR DATA PROTECTION AND DEVICE FOR CARRYING OUT THE SAME
PROCEDE POUR SAUVEGARDER DES DONNEES ET APPAREIL PERMETTANT SA REALISATION

(30) Priorität: 25.02.2005 DE 102005008716
(43) Veröffentlichungstag der Anmeldung: 21.11.2007
(73) Patentinhaber: ROBERT BOSCH GMBH, 70442 Stuttgart (DE)
(72) Erfinder: FISLAGE, Markus, 71229 Leonberg (DE)
(86) Internationale Anmeldenummer: PCT/EP2006/060248
(87) Internationale Veröffentlichungsnummer: WO 2006/089943

(56) Entgegenhaltungen:
- US-A- 6 003 151
- US-B1- 6 421 805

## Beschreibung

### Stand der Technik

Die vorliegende Erfindung betrifft ein Verfahren zur Sicherstellung der Unversehrtheit von Daten in einem datenverarbeitenden Gerät und ein Gerät, das in der Lage ist, ein solches Verfahren auszuführen.

Bei Geräten, die zur Steuerung von Maschinen oder Prozessen eingesetzt werden, ist es von großer Bedeutung, dass die Unversehrtheit der Daten, auf die diese Geräte zur Ausführung ihrer Steuerungsaufgaben zurückgreifen, zweifelsfrei sichergestellt ist. Fehler in diesen Daten, die z. B. auf eine technische Störung des Geräts selber oder auf einen unbefugten Zugriff eines Dritten zurückgehen können, müssen mit Gewissheit erkannt werden, damit jede Funktion, deren Betriebssicherheit nicht mehr gewährleistet ist, gesperrt werden kann.

Es ist seit langem bekannt, die Unversehrtheit von Daten in einem datenverarbeitenden Gerät zu sichern, indem die Daten in kodierter Form abgespeichert werden und nur dann benutzt werden, wenn sie ein gültiges Codewort des verwendeten Codes darstellen. Im einfachsten Fall kann es sich bei der Kodierung um das Hinzufügen eines Paritätsbits oder einer Prüfsumme handeln.

Der wesentliche Vorteil dieser Codes ist ihre Einfachheit, die es erlaubt, eine Prüfung, ob ein im Speicher gelesenes Datenwort ein existierendes Codewort ist, in Echtzeit oder gar unabhängig von einem Lesezugriff auf das betreffende Codewort durchzuführen. So sind beispielsweise Mikrocomputer bekannt, die zu jeweils acht Speicherbausteinen, die verschiedene Bits eines Datenbytes speichern, einen neunten Speicherbaustein für ein Paritätsbit aufweisen, und die eine Kontrollschaltung aufweisen, die zu jedem aus den acht Speicherbausteinen gelesenen Byte das Paritätsbit berechnet, mit dem im neunten Speicherbaustein gespeicherten Vergleich und bei Nichtübereinstimmung eine Störung signalisiert.

Mit dieser Technik ist es zwar möglich, Fehler in den gespeicherten Daten zu erkennen, eine Korrektur des Fehlers ist jedoch nicht möglich. Ein Steuerungsprozess, der auf fehlerhafte Daten zuzugreifen versucht, kann daher allenfalls abgebrochen werden; eine Fortsetzung des Prozesses auf der Grundlage korrigierter Daten ist nicht vorgesehen. Dies ist jedoch keine befriedigende Lösung für Anwendungen, bei denen der Abbruch eines Prozesses genauso ein Sicherheitsrisiko darstellen kann wie die Fortsetzung des Prozesses unter Verwendung falscher Daten.

Auf dem Gebiet der Kfz-Steuergeräte ist es bekannt, zur Vermeidung dieser Probleme sicherheitsrelevante Daten mehrfach zu speichern, so dass in dem Fall, dass ein Datenwert, auf den zugegriffen werden soll, als fehlerhaft erkannt wird, eine Kopie zur Verfügung steht, die statt des fehlerhaften Werts verwendet werden kann.

Diese Vorgehensweise ist mit einem erheblichen Speicherbedarf verbunden, da zum einen jedes sicherheitsrelevante Datum in wenigstens zwei Exemplaren abgespeichert sein muss und darüber hinaus redundante Information vorhanden sein muss, die es erlaubt, zu erkennen, ob das Datum, auf das zugegriffen werden soll, fehlerhaft ist oder nicht.

Ein weiteres Verfahren zur Fehlererkennung und Fehlerkorrektur ist aus der Druckschrift US 6,421,805 B1 bekannt. Dort wird ein Verfahren beschrieben, bei dem fehlerhafte Datenpakete in einem Datenblock erkannt und anschließend alle Datenpakete des Datenblocks korrigiert werden. Dabei ist nicht ausgeschlossen, dass durch die Korrektur auch fehlerfreie Datenpakete aus dem Datenblock verändert werden.

Ein weiteres Verfahren zur Fehlererkennung ist aus der Druckschrift US 6,003,151 bekannt. Dort wird ein Fehler in einem Datensektor erkannt und anschließend der gesamte Datensektor korrigiert.

### Vorteile der Erfindung

Durch die vorliegende Erfindung, wie in den Ansprüchen 1 und 9 definiert, wird ein Verfahren zur Sicherstellung der Unversehrtheit von Daten in einem datenverarbeitenden Gerät und ein zur Ausführung des Verfahrens geeignetes Gerät geschaffen, die es erlauben, mit erheblich reduziertem Aufwand an Speicherplatz die Unversehrtheit der Daten zu gewährleisten.

Die Erfindung basiert auf der Verwendung von zwei verschiedenen Codes zum Codieren von zu sichernden Daten, einem ersten Code, von dem lediglich verlangt ist, dass er die Erkennung des Vorhandenseins eines Fehlers ermöglichen muss und der daher einfach und schnell dekodierbar sein kann, und eines zweiten Codes, der neben der Erkennung von Fehlern auch deren Korrektur erlaubt und eingesetzt wird, wenn ein Datenwort gelesen worden ist, das keinem existierenden Codewort des ersten Codes entspricht, um dessen Fehler zu identifizieren und zu beheben.

Das erfindungsgemäße Verfahren umfasst die Schritte
a) Lesen eines Datenpakets aus einem Speicher und Prüfen, ob das Datenpaket ein existierendes Codewort des ersten Codes ist;
b) wenn das Datenpaket ein existierendes Codewort ist, Akzeptieren des Datenpakets als unversehrt;
c) wenn das Datenpaket kein existierendes Codewort ist,
c1) Ermitteln wenigstens eines Datenblocks des fehlerkorrigierenden zweiten Codes, der sich mit dem gelesenen Datenpaket überschneidet;
c2) Suchen eines Fehlers in dem Datenpaket mit Hilfe des zweiten Codes;
c3) Korrigieren des Datenpakets anhand des Ergebnisses der Suche; und
c4) Akzeptieren des korrigierten Datenpakets als unversehrt.

Die Sicherheit des Verfahrens lässt sich erheblich steigern, wenn Schritt c4) nur ausgeführt wird, wenn nach dem Schritt c3) festgestellt wird, dass das korrigierte Datenpaket ein existierendes Codewort des ersten Codes ist.

Das erfindungsgemäße Verfahren kann nacheinander auf mehrere Datenpakete angewandt werden, wobei diese Datenpakete unterschiedliche Länge haben können. Insbesondere wenn die Daten Programmanweisungen umfassen, die in eine Mehrzahl von Routinen aufgeteilt sind, ist es möglich, die Grenzen zwischen den Datenpaketen wenigstens zum Teil übereinstimmend mit den Grenzen zwischen den Programmroutinen festzulegen. Wenn festgestellt wird, dass ein solches gelesenes Datenpaket einem existierenden Codewort des ersten Codes entspricht, so kann die in diesem Datenpaket verkörperte Routine zur Ausführung freigegeben werden, unabhängig davon, ob eventuell eine andere der Routinen fehlerhaft ist. So wird die Möglichkeit geschaffen, das Gerät mit eingeschränkten Funktionsumfang zu betreiben, wenn sich ein Datenpaket als fehlerhaft erweist und der Fehler auch nicht mit Hilfe des zweiten Codes korrigierbar ist.

Zweckmäßigerweise wird ein mit Hilfe des zweiten Codes fehlerkorrigiertes Datenpaket in den Speicher zurückgeschrieben, aus dem es zuvor fehlerhaft gelesen wurde, um so den Speicherinhalt zu korrigieren. Partielle Datenverluste können auf diese Weise selbsttätig behoben werden.

Um einen versehentlichen Zugriff auf fehlerhafte Daten sicher auszuschließen, kann vorgesehen werden, dass jedes als unversehrt akzeptierte Datenpaket in einen Speicher mit wahlfreiem Zugriff eingetragen wird, und dass spätere Zugriffe auf dieses Datenpaket in diesem Speicher mit wahlfreiem Zugriff erfolgen. Da fehlerhafte, nicht korrigierbare Datenpakete nicht in diesen Speicher gelangen, ist ein Zugriff auf sie ausgeschlossen. Zweckmäßigerweise wird das akzeptierte Datenpaket vor dem Eintragen decodiert, wobei die Decodierung vorzugsweise darin besteht, einen lediglich der Überprüfung auf Fehlerhaftigkeit dienenden redundanten Teil des von dem Datenpaket gebildeten Codeworts des ersten Codes von einem Nutzteil des Codeworts abzutrennen und letzteren allein als decodiertes Codewort in den Speicher mit wahlfreiem Zugriff einzutragen.

Auch die Codewörter des zweiten Codes bestehen zweckmäßigerweise aus einem mit dem decodierten Codewort identischen Nutzteil und einem von dem Nutzteil nach einem vorgegebenen Verfahren ableitbaren redundanten Teil, des bei der Decodierung einfach abgetrennt werden kann.

Weitere Merkmale und Vorteile der Erfindung ergeben sich aus der nachfolgenden Beschreibung von Ausführungsbeispielen unter Bezugnahme auf die beigefügten Figuren.

### Figuren

- Fig. 1: ist ein Blockdiagramm eines KfZ- Steuergeräts als Beispiel eines erfin- dungsgemäßen datenverarbeitenden Geräts;
- Fig. 2: zeigt die Verteilung der Daten im Flash- Speicher des Geräts aus Fig. 1 gemäß ei- ner ersten Ausgestaltung;
- Fig. 3: zeigt die Verteilung der Daten in dem Flash-Speicher gemäß einer zweiten Aus- gestaltung;
- Fig. 4: ein Flussdiagramm einer ersten Ausgestal- tung eines Verfahrens zum Sicherstellen der Unversehrtheit der Daten des Flash- speichers; und
- Fig. 5: ein Flussdiagramm einer zweiten Ausges- taltung des Verfahrens.

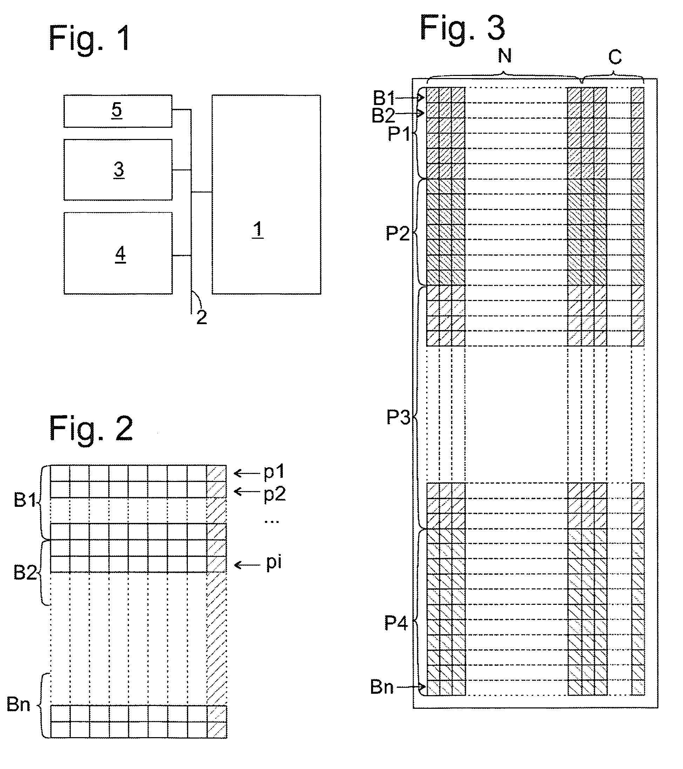

Das Blockdiagramm der Fig. 1 zeigt schematisch den Aufbau eines erfindungsgemäßen Steuergerätes. Das Steuergerät umfasst einen Mikroprozessor oder Mikrocontroller 1, der über einen Bus 2 mit einem Flash-Speicher 3 und einem RAM 4 verbunden ist. In der Fig. nicht gezeigte Sensoren und Aktoren zum Steuern des Betriebs eines Kfz-Motors sind mit dem Mikrocontroller 1 über den Bus 2 verbunden.

Ein Betriebsprogramm für den Mikrokontroller 1 ist in dem Flash-Speicher 3 in codierter Form abgelegt.

Hilfsroutinen, die der Mikrocontroller 1 benötigt, um die Decodierung des Inhalts des Flash-Speichers 3 vornehmen zu können, sind in einem ROM 5 gespeichert. Das ROM 5 ist in der Fig. als vom Mikrocontroller 1 getrennte Schaltung dargestellt, kann aber auch zum verbesserten Schutz vor Manipulationen durch Unbefugte mit dem Mikrocontroller 1 auf einem gleichen Halbleitersubstrat integriert sein.

Fig. 2 zeigt ein erstes Beispiel für die Struktur der im Flash-Speicher 3 abgelegten Daten. Jeweils ein Datenbit ist in Fig. 2 durch ein Rechteck repräsentiert, so dass jede Zeile ein 9-Bit-Datenpaket p1, p2,... repräsentiert, das aus acht Nutzbits, dargestellt als leere Rechtecke, und einem schraffiert dargestellten Paritätsbit besteht. Jedes Datenpaket p1, p2.... kann also aufgefasst werden als ein Codewort eines Codes, dessen Codewörter durch Anhängen eines Paritätsbits an ein Byte erhalten werden. Der Inhalt des Speichers ist unterteilt in eine Vielzahl von Blöcken B1, B2...Bn, die jeweils eine gleiche Zahl von Datenpaketen, z. B. 255 Stück umfassen. Die Datenblöcke sind einer Reed-Solomon-Codierung unterzogen, d. h., jeder Block enthält eine feste Anzahl von Nutzdatenpaketen, z. B. 223 Stück und eine kleinere Anzahl, hier 32, von aus den Nutzdatenpaketen nach einem festgelegten Verfahren berechneten Korrekturdatenpaketen, die es in an sich bekannter Weise erlauben, Fehler in den Reed-Solomon-Codewörtern zu lokalisieren und zu korrigieren.

In Fig. 2 sind die Blöcke jeweils einteilig zusammenhängend im Speicher 3 angeordnet. Es ist aber auch möglich und zum sukzessiven Lesen der Nutzdaten auch vorteilhaft, die Nutzdatenpakete aller RS-codierten Datenblöcke an aufeinander folgenden Speicherplätzen anzuordnen und die dazugehörigen Korrekturdatenpakete getrennt zu speichern.

Eine abgewandelte Aufteilung des Flash-Speichers 3 ist in Fig. 3 dargestellt. Hier repräsentiert jedes Rechteck ein Byte, und jede Zeile des Diagramms repräsentiert einen Reed-Solomon-kodierten Datenblock von z. B. 255 Bytes, der sich wie im Falle der Fig. 2 aus 233 Nutzdatenbytes N und 32 Korrekturbytes C zusammensetzt. Die in dem Flash-Speicher gespeicherten Programmanweisungen sind in eine Mehrzahl von Routinen strukturiert, von denen jede eine Anzahl solcher RS-codierter Blöcke B1, B2,....Bn belegt. Die Grenzen zwischen den nacheinander im Speicher eingetragenen Routinen sind so festgelegt, dass jeder der Blöcke B1, B2,...Bn Anweisungen aus maximal einer Routine, in der Fig. dargestellt durch unterschiedliche Schraffurtypen, enthält. Die einer gleichen Routine angehörenden RS-codierten Blöcke sind zu Datenpaketen P1, P2, P3, P4 zusammengefasst, von denen jedes durch Hinzufügen einer Prüfsummeninformation ein zweites Mal codiert ist, wobei die Prüfsummeninformation in dem Flashspeicher 3 nach Gutdünken unmittelbar im Anschluss an die Nutzdaten des Pakets P1, P2, P3 oder P4, auf die sie sich bezieht, eingetragen sein kann, oder die Prüfsummeninformation einer Vielzahl von Paketen in einem adressenmäßig von deren Nutzdaten getrennten Speicherbereich zusammengefasst sein kann.

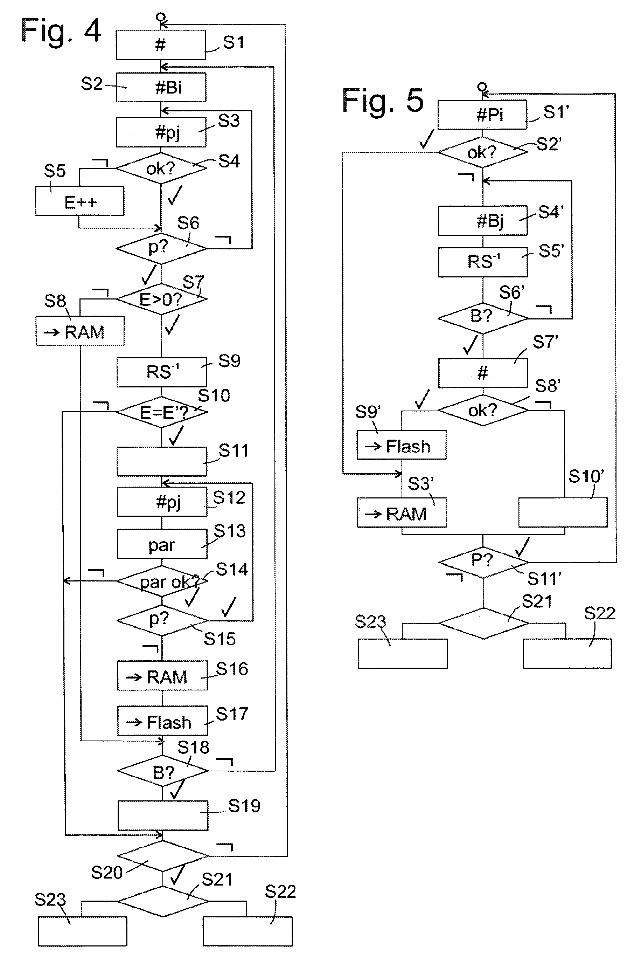

Fig. 4 zeigt ein Flussdiagramm der Verarbeitung, die der Mikrokontroller 1 durchführt, um die Unversehrtheit der Daten in einem gemäß Fig. 2 strukturierten Flash-Speicher 3 zu verifizieren. Eine solche Verifizierung kann insbesondere jeweils beim Starten des Steuergeräts oder auch, falls genügend Verarbeitungsleistung verfügbar ist, zu bestimmten Zeiten während des Betriebs des Steuergeräts erfolgen.

In Schritt S1 wählt der Mikrokontroller eine der in dem Flash-Speicher gespeicherten Routinen aus. In Schritt S2 wählt er einen Block Bi=B1, B2...oder Bn dieser Routine und in Schritt S3 ein Datenpaket pj, j=1, 2....des Blocks Bi aus. Schritt S4 ist eine an sich bekannte Paritätsprüfung des Datenpakets pj. Falls die Prüfung ergibt, dass das Paritätsbit korrekt ist, geht das Verfahren direkt zu Schritt S6; anderenfalls wird zuvor ein jeweils beim Auswählen eines Blocks in Schritt S2 auf Null gesetzter Zählwert E eines Fehlerzählers imkrementiert (Schritt S5).

Im Schritt S6 wird geprüft, ob alle Datenpakete des Blocks Bi ausgewählt wurden und die Prüfung des Blocks Bi damit beendet ist. Wenn nicht, kehrt das Verfahren zurück zu Schritt S3; wenn ja, geht es weiter zu Schritt S7, in welchem geprüft wird, ob der Zählwert E größer als Null ist. Wenn dies nicht der Fall ist, d. h. wenn die Paritätswerte aller Datenpakete korrekt sind, wird der Block in Schritt S8 als fehlerfrei akzeptiert und in das RAM 4 übertragen, und das Verfahren springt zu Schritt S18, auf den an späterer Stelle eingegangen wird.

Erweist sich in Schritt S7 der Zählwert E als von Null verschieden, so wird in Schritt S9 eine Reed-Solomon-Decodierung auf den Block Bi angewandt, um Anzahl und Lage von fehlerhaften Bits in dem Block zu ermitteln. In Schritt S10 wird geprüft, ob die in Schritt S9 ermittelte Fehlerzahl E' von dem Zählwert E des Fehlerzählers abweicht. Wenn ja, dann muss eine der beiden Fehlerzahlen E, E' falsch sein, und folglich sind auch die in Schritt S9 ermittelten Angaben über die Position der vermeintlich fehlerhaften Bits unsicher. Da in einem solchen Fall die Fehlerkorrektur nicht sicher möglich ist, wird das Verfahren für die betreffende Routine abgebrochen durch einen Sprung nach S20.

Wenn in Schritt S10 festgestellt wird, dass die ermittelten Fehlerzahlen übereinstimmen, kann mit hinreichender Gewissheit davon ausgegangen werden, dass eine Korrektur der als fehlerhaft erkannten Bits die korrekten Daten wieder herstellt, so dass in Schritt S11 eine entsprechende Korrektur an allen ein fehlerhaftes Bit enthaltenen Blöcken Paketen pj des Blocks Bi vorgenommen wird.

In Schritt S12 wird ein Datenpaket pj; j=1, 2,... des so erhaltenen, vermeintlich fehlerfreien Datenblocks Bi ausgewählt, und die Parität seiner acht Nutzbits wird in Schritt S13 ermittelt. Wenn ein Vergleich der ermittelten Parität mit der im neunten Bit gespeicherten Parität in Schritt S14 Nichtübereinstimmung ergibt, ist die Korrektur der Daten für die betreffende Routine gescheitert, und das Verfahren geht zu Schritt S20. Wenn die Prüfung eine korrekte Parität ergibt, folgt in Schritt S15 eine Prüfung, ob alle Datenpakete pj des Blocks ausgewählt worden sind. Wenn nicht, kehrt das Verfahren zu Schritt S12 zurück, wo ein neues Datenpaket ausgewählt wird, wenn ja, ist die Korrektur des Blocks Bi beendet, der Block Bi wird in Schritt S16 akzeptiert und in das RAM 4 eingetragen. Ferner wird in Schritt S17 der Block Bi oder zumindest dessen als fehlerhaft erkannte Datenpakete im Flash-Speicher 3 mit entsprechenden korrigierten Werten überschrieben, so dass auch der Inhalt des Flash-Speichers 3 wieder korrekt ist und der Fehler sich bei einer erneuten Prüfung nicht wiederholen sollte.

Anschließend wird in Schritt S18 geprüft, ob alle Blöcke der gegenwärtig ausgewählten Routine verarbeitet sind. Wenn nein, kehrt das Verfahren zu Schritt S2 zurück, um einen neuen Block zu wählen, wenn ja, wird die inzwischen komplett in das RAM 4 eingetragene Routine zur Ausführung durch die Prozessoreinheit 7 freigegeben (S19).

Anschließend wird in Schritt S20 geprüft, ob eine unbearbeitete Routine übrig ist; wenn ja, wird in Schritt S1 eine noch unbearbeitete Routine ausgewählt und das Verfahren für diese wiederholt; anderenfalls folgt ein Schritt S21 der Bewertung der zur Ausführung freigegebenen Routinen, ob diese für einen Betrieb des Steuergeräts, wenn auch eventuell mit eingeschränktem Funktionsumfang, ausreichen. Wenn keine als lebenswichtig beurteilte Routine im RAM 4 fehlt, beginnt die Prozessoreinheit 7, die darin enthaltenen Routinen abzuarbeiten (S22), wobei gegebenenfalls für jede fehlende Routine eine Fehlermeldung ausgegeben wird. Fehlt eine als lebenswichtig beurteilte Routine, so geht die Prozessoreinheit 7 nicht in Betrieb (S23).

Fig. 5 zeigt einen Verarbeitungsablauf für den in Fig. 3 dargestellten Fall, dass die Programmanweisungen einer Routine jeweils die Nutzdaten eines Datenpaketes bilden und ein Datenpaket eine Mehrzahl von Reed-Solomon-codierten Blöcken umfasst.

Die Auswahl einer Routine in Schritt S1' ist hier gleichbedeutend mit der Auswahl eines Datenpaketes Pi, i=1, 2,.... Das Datenpaket Pi wird komplett aus dem Flash-Speicher 3 gelesen. Es wird aufgefasst als ein Codewort, das aus einem Nutzdatenteil und aus diesem Nutzdatenteil berechneter Integritätsprüfinformation, beispielsweise einer Mehrzahl von Paritätsbits, einer zyklischen Prüfsumme, einem CRC-Datum oder dergleichen, besteht. Der Mikrocontroller 1 überprüft in Schritt S2', ob es sich bei dem Datenwort um ein zulässiges Codewort handelt, indem er die Integritätsprüfinformation aus den gelesenen Nutzdaten berechnet und mit der gelesenen Integritätsprüfinformation vergleicht. Bei Übereinstimmung ist das gelesene Datenpaket ein existierendes Codewort, und es wird in Schritt S3' als korrekt akzeptiert, und seine Nutzdaten werden in das RAM 4 eingetragen. Bei Nichtübereinstimmung hingegen muss ein Fehler vorliegen. In diesem Fall wird in Schritt S4' einer der Blöcke Bj, j=1, 2.... des betreffenden Pakets ausgewählt, und mit Hilfe der RS-Decodierung werden in Schritt S5' Fehler dieses Blocks Bj gesucht und gegebenenfalls korrigiert. Die Schritte S4' und S5' werden so oft wiederholt, bis in Schritt S6' festgestellt wird, dass alle Blöcke des Datenpakets Pi verarbeitet sind. Dabei können sowohl die Nutzdaten als auch die zugehörige Integritätsprüfinformation als fehlerhaft erkannt und korrigiert werden.

Wenn alle Blöcke des Pakets Pj verarbeitet sind, wird anhand der korrigierten Nutzdaten in Schritt S7' erneut die Integritätsprüfinformation für das Paket Pi berechnet und in Schritt S8' mit der (gegebenenfalls in Schritt S5' korrigierten) gelesenen Integritätsprüfinformation verglichen. Bei Übereinstimmung geht das Verfahren zu Schritt S9', in welchem das im Flash-Speicher 3 offenbar fehlerhaft gespeicherte Datenpaket Pi mit dem in Schritt S5' erhaltenen korrigierten Datenpaket Pi überschrieben wird, anschließend geht das Verfahren zu Schritt S3'. Bei Nichtübereinstimmung wird die betreffende Routine als irreparabel fehlerhaft erkannt und nicht in das RAM 4 übernommen (S10'). Im Anschluss an sowohl Schritt S3' als auch S10' folgt in Schritt S11' eine Prüfung, ob noch eine zu bearbeitende Routine bzw. ein Datenpaket übrig ist, und falls ja, kehrt das Verfahren zurück zu Schritt S1'. Falls nein, schließt sich die Verarbeitung der in Verbindung mit Fig. 4 beschriebenen Schritte S21 bis S23 an.

Auf diese Weise wird ein hohes Maß an Sicherheit für die Daten des Flash-Speichers 3 erzielt, ohne dass Speicherplatz für mehrere Kopien dieser Daten bereit gestellt werden muss.

## Patentansprüche

1. Verfahren zur Sicherstellung der Unversehrtheit von Daten in einem datenverarbeitenden Gerät, mit den Schritten:
a) Lesen (S3, S1') eines Datenpakets (pj; Pi) aus einem Speicher (3) und Prüfen (S4; S4'), ob das Datenpaket ein existierendes Codewort eines vorgegebenen ersten Codes ist;
b) wenn das Datenpaket (pj; Pi) ein existierendes Codewort ist, Akzeptieren des Datenpakets als unversehrt (S8; S3'); wobei,
c) wenn das Datenpaket kein existierendes Codewort ist,
c1) Ermitteln wenigstens eines Datenblocks (Bi; Bj) eines fehlerkorrigierenden zweiten Codes, der sich mit dem gelesenen Datenpaket (pj; Pi) überschneidet;
c2) Suchen (S9; S5') eines Fehlers in dem Datenpaket (pj; Pi) mit Hilfe des zweiten Codes;
c3) Korrigieren (S9; S5') des Datenpakets anhand des Ergebnisses der Suche; und
c4) Akzeptieren des korrigierten Datenpakets als unversehrt (S16; S3').

2. Verfahren nach Anspruch 1, **dadurch gekennzeichnet, dass** Schritt c4) nur ausgeführt wird, wenn nach dem Schritt c3) festgestellt wird (S14, S8'), dass das korrigierte Datenpaket ein existierendes Codewort des ersten Codes ist.

3. Verfahren nach Anspruch 1 oder 2, **dadurch gekennzeichnet, dass** die Daten, deren Unversehrtheit sicherzustellen ist, mehrere Datenpakete (Pi) unterschiedlicher Länge umfassen, und dass die Schritte a) bis c4) für jedes dieser Datenpakete (Pi) ausgeführt werden.

4. Verfahren nach Anspruch 3, **dadurch gekennzeichnet, dass** die Daten Programmanweisungen umfassen, die in eine Mehrzahl von Routinen aufgeteilt sind, und dass wenigstens einige der Grenzen zwischen aufeinanderfolgend in dem Speicher (3) abgelegten Datenpaketen (P1, P2...) mit Grenzen zwischen Programmroutinen zusammenfällt.

5. Verfahren nach einem der vorhergehenden Ansprüche, **dadurch gekennzeichnet, dass** das in Schritt c3) erhaltene korrigierte Datenpaket in den Speicher (3) rückgeschrieben wird (S17, S9').

6. Verfahren nach einem der vorhergehenden Ansprüche, **dadurch gekennzeichnet, dass** jedes als unversehrt akzeptierte Datenpaket in einen Speicher (4) mit wahlfreiem Zugriff eingetragen wird (S8, S16; S3').

7. Verfahren nach Anspruch 6, **dadurch gekennzeichnet, dass** das akzeptierte Datenpaket vor dem Eintragen dekodiert wird.

8. Verfahren nach einem der vorhergehenden Ansprüche, **dadurch gekennzeichnet, dass** als erster und/oder als zweiter Code jeweils Codes verwendet werden, bei denen jedes Codewort aus einem mit dem decodierten Codewort identischen Nutzteil und einem von dem Nutzteil ableitbaren redundanten Teil besteht.

9. Datenverarbeitendes Gerät, das derart ausgeprägt ist, dass
- es ein Datenpaket (pj; Pi) aus einem Speicher (3) liest;
- es prüft, ob das Datenpaket (pj; Pi) ein existierendes Codewort eines vorgegebenen ersten Codes ist;
- es das Datenpaket (pj; Pi) als unversehrt akzeptiert wenn das Datenpaket (pj; Pi) ein existiendes codewort ist; wobei, wenn das Datenpackt (pj; Pi) Keinexistierendes codewort ist:
- es wenigstens einen Datenblock (Bi; Bj) eines fehlerkorrigierenden zweiten Codes, der sich mit dem gelesenen Datenpaket (pj; Pi) überschneidet ermittelt;
- es einen Fehler in dem Datenpaket (pj; Pi) mit Hilfe des zweiten Codes sucht;
- es das Datenpaket anhand des Ergebnisses der Suche korrigiert; und
- das korrigierte Datenpaket als unversehrt akzeptiert.

10. Gerät nach Anspruch 9, **dadurch gekennzeichnet, dass** der erste Speicher (3) unter der Kontrolle der Fehlerkorrektureinrichtung (1) mit korrigierten Datenblöcken überschreibbar ist.

11. Gerät nach Anspruch 9 oder 10, **dadurch gekennzeichnet, dass** es einen flüchtigen Speicher (4) zum Speichern der decodierten Datenwörter aufweist.

12. Gerät nach Anspruch 11, **dadurch gekennzeichnet, dass** es einen Prozessor (1) zum Ausführen von in den Datenwörtern codierten Programmanweisungen umfasst, der zum Lesen der Programmanweisungen auf den flüchtigen Speicher (4) zugreift.

13. Gerät nach einem der Ansprüche 9 bis 12, **dadurch gekennzeichnet, dass** es ein Kfz-Steuergerät ist.

## Claims

1. Method for ensuring the soundness of data in a data-processing appliance, having the following steps:
a) a data packet (pj; Pi) is read (S3, S1') from a memory (3) and a check is performed (S4; S4') to determine whether the data packet is an existing code word from a prescribed first code;
b) if the data packet (pj; Pi) is an existing code word, the data packet is accepted as sound (S8; S3'); wherein
c) if the data packet is not an existing code word,
c1)at least one data block (Bi; Bj) from an error-correcting second code which overlaps the read data packet (pj; Pi) is ascertained;
c2)an error is sought (S9; S5') in the data packet (pj; Pi) using the second code;
c3)the data packet is corrected (S9; S5') using the result of the search; and
c4)the corrected data packet is accepted as sound (S16; S3').

2. Method according to Claim 1, **characterized in that** step c4) is performed only if it is established (S14, S8') after step c3) that the corrected data packet is an existing code word from the first code.

3. Method according to Claim 1 or 2, **characterized in that** the data whose soundness needs to be ensured comprise a plurality of data packets (Pi) of different length, and **in that** steps a) to c4) are performed for each of these data packets (Pi).

4. Method according to Claim 3, **characterized in that** the data comprise program instructions which are split into a plurality of routines, and **in that** at least some of the boundaries between data packets (P1, P2 ...) stored successively in the memory (3) coincide with boundaries between program routines.

5. Method according to one of the preceding claims, **characterized in that** the corrected data packet obtained in step c3) is written back (S17, S9') to the memory (3).

6. Method according to one of the preceding claims, **characterized in that** each data packet accepted as sound is entered (S8, S16; S3') into a random access memory (4).

7. Method according to Claim 6, **characterized in that** the accepted data packet is decoded prior to entry.

8. Method according to one of the preceding claims, **characterized in that** the first and/or the second code used is/are respectively codes for which each code word comprises a useful part which is identical to the decoded code word and a redundant part which can be derived from the useful part.

9. Data-processing appliance which is designed such that
- it reads a data packet (pj, Pi) from a memory (3);
- it checks whether the data packet (pj; Pi) is an existing code word from a prescribed first code;
- it accepts the data packet (pj; Pi) as sound if the data packet (pj; Pi) is an existing code word, wherein
if the data packet (pj; Pi) is not an existing code word:
- it ascertains at least one data block (Bi; Bj) from an error-correcting second code which overlaps the read data packet (pj; Pi);
- it searches for an error in the data packet (pj; Pi) using the second code;
- it corrects the data packet using the result of the search; and
- accepts the corrected data packet as sound.

10. Appliance according to Claim 9, **characterized in that** the first memory (3) can be overwritten with corrected data blocks under the control of the error-correction device (1).

11. Appliance according to Claim 9 or 10, **characterized in that** it has a volatile memory (4) for storing the decoded data words.

12. Appliance according to Claim 11, **characterized in that** it comprises a processor (1) for executing program instructions encoded in the data words, said processor reading the program instructions by accessing the volatile memory (4).

13. Appliance according to one of Claims 9 to 12, **characterized in that** it is a motor vehicle controller.

## Revendications

1. Procédé destiné à garantir l'intégrité des données dans un appareil de traitement de données comprenant les étapes suivantes :
a) lecture (S3, S1') d'un paquet de données (pj ; Pi) depuis une mémoire (3) et contrôle (S4 ; S4') en vue de vérifier si le paquet de données est un mot de code existant d'un premier code prédéfini ;
b) si le paquet de données (pj ; Pi) est un mot de code existant, acceptation du paquet de données en tant que paquet intègre (S8 ; S3'),
c) si le paquet de données n'est pas un mot de code existant,
c1) détermination d'au moins un bloc de données (Bi ; Bj) d'un deuxième code de correction des erreurs qui se recoupe avec le paquet de données (pj ; Pi) lu ;
c2) recherche (S9 ; S5') d'une erreur dans le paquet de données (pj ; Pi) à l'aide du deuxième code ;
c3) correction (S9 ; S5') du paquet de données au moyen du résultat de la recherche ; et
c4) acceptation du paquet de données corrigé en tant que paquet intègre (S16 ; S3').

2. Procédé selon la revendication 1, **caractérisé en ce que** l'étape c4) n'est exécutée que s'il est constaté après l'étape c3) (S14, S8') que le paquet de données corrigé est un mot de code existant du premier code.

3. Procédé selon la revendication 1 ou 2, **caractérisé en ce que** les données dont il faut garantir l'intégrité comprennent plusieurs paquets de données (Pi) de longueurs différentes et que les étapes a) à c4) sont exécutées pour chacun de ces paquets de données (Pi).

4. Procédé selon la revendication 3, **caractérisé en ce que** les données comprennent des instructions de programme qui sont divisées en une pluralité de routines et qu'au moins certaines des limites entre les paquets de données (P1, P2, ...) stockés dans la mémoire (3) coïncident avec les limites entre les routines de programme.

5. Procédé selon l'une des revendications précédentes, **caractérisé en ce que** le paquet de données corrigé obtenu dans l'étape c3) est de nouveau écrit (S17, S9') dans la mémoire (3).

6. Procédé selon l'une des revendications précédentes, **caractérisé en ce que** chaque paquet de données accepté comme paquet intègre est inscrit dans une mémoire (4) à accès aléatoire (S8, S16 ; S3').

7. Procédé selon la revendication 6, **caractérisé en ce que** le paquet de données accepté est décodé avant l'inscription.

8. Procédé selon l'une des revendications précédentes, **caractérisé en ce que** les codes utilisés comme premier et/ou comme deuxième code sont respectivement des codes avec lesquels chaque mot de code se compose d'une partie utile identique au mot de code décodé et d'une partie redondante pouvant être dérivée de la partie utile.

9. Appareil de traitement de données qui est **caractérisé en ce que**
- il lit un paquet de données (pj ; Pi) dans une mémoire (3) ;
- il vérifie si le paquet de données (pj ; Pi) est un mot de code existant d'un premier code prédéfini ;
- il accepte le paquet de données (pj ; Pi) en tant que paquet intègre si le paquet de données (pj ; Pi) est un mot de code existant et,
- si le paquet de données (pj ; Pi) n'est pas un mot de code existant,
- il détermine au moins un bloc de données (Bi ; Bj) d'un deuxième code de correction des erreurs qui se recoupe avec le paquet de données (pj ; Pi) lu ;
- il recherche une erreur dans le paquet de données (pj ; Pi) à l'aide du deuxième code ;
- il corrige le paquet de données au moyen du résultat de la recherche ; et
- il accepte le paquet de données corrigé en tant que paquet intègre.

10. Appareil selon la revendication 9, **caractérisé en ce que** la première mémoire (3) peut être réécrite avec des blocs de données corrigés sous le contrôle du dispositif de correction d'erreur (1).

11. Appareil selon la revendication 9 ou 10, **caractérisé en ce qu'**il présente une mémoire volatile (4) pour mémoriser les mots de données décodés.

12. Appareil selon la revendication 11, **caractérisé en ce qu'**il comprend un processeur (1) pour exécuter les instructions de programme codées dans les mots de données, lequel accède à la mémoire volatile (4) pour lire les instructions de programme.

13. Appareil selon l'une des revendications 9 à 12, **caractérisé en ce qu'**il s'agit d'un appareil de commande pour véhicule automobile.
